# EUROPEAN PATENT APPLICATION

(11) **EP 2 700 810 A1**
(43) Date of publication of application: **26.02.2014**
(21) Application number: 13193376.4
(22) Date of filing: 02.11.2007
(51) Int. Cl.: F03B 13/18, E02B 9/08, F03B 13/14, F03B 13/16, F03B 13/12, B63B 22/00, B63B 22/04, B63B 22/20

(54) **Buoyant actuator for a wave energy converter**

(30) Priority: 03.11.2006 AU 2006906143
(62) Divisional of application: 07815489.5
(71) Applicant: CETO IP Pty Ltd, Western Australia 6005 (AU)
(72) Inventor: Burns, Alan, Robert, Dalkeith, Western Australia WA 6009 (AU)
(74) Representative: Hendry, Niall James

(57) **Abstract**

A buoyant actuator (10) responsive to wave motion is provided. The buoyant actuator comprises a body (21) defining a chamber (23) for accommodating matter. A hydrodynamic property of the body is selectively variable by varying the matter within the chamber. The body comprises a wall structure (25) having a pliant outer skin (27) at a boundary of the chamber. The outer skin is adapted to deflect in response to a variation in matter within the body. The matter comprises a plurality of buoyant spheres (53) arranged to roll one against another, and the chamber is filled with the spheres so that the outer skin is drawn into a taut condition by the outward pressure of the spheres inside. This causes the actuator to assume a design shape, and the spheres are able to collectively maintain the shape of the actuator and roll against one another in response to outside forces on the actuator while still maintaining the shape of the actuator.

## Description

This invention relates to extraction of energy from wave motion, and more particularly to a buoyant actuator responsive to wave motion as well as a method of operating such an actuator. The invention also relates to a wave energy conversion system and to a method of operating such a system.

The invention has been devised particularly, although not necessarily solely, as an actuator for coupling wave motion to a device operable in response to wave motion. A particular application of the actuator according to the invention is in relation to the harnessing ocean wave energy and for converting the harnessed energy to linear motion for driving an energy conversion device such as, for example, a fluid pump or linear electric generator. In such an arrangement, the actuator may be operably connected to the energy conversion device, the actuator being buoyantly suspended within the body of seawater above the device but typically below the water surface. With this arrangement, dynamic uplift of the wave motion is transferred to the uni-axial force that operates the energy conversion device.

The invention in effect comprises a buoy which can be considered to be an actuator in such circumstances as it possesses dimensions that are a significant fraction of a wavelength of the disturbances on the body of water and it intercepts a significant portion of the energy flux of the wave motion near the surface of the body of water.

### Background

The capture of energy from ocean waves is a rapidly growing enterprise around the world with a number of commercial wave energy devices undergoing sea trials and small-scale commercial deployment. An important class of these devices operates by transforming the heaving motion of the sea to produce linear motion in a mechanism that is subsequently used to drive an energy conversion device (such as, for example, a fluid pump or linear electric generator).

The capture and conversion of wave energy to high pressure seawater for the production of electricity and direct desalination by membrane reverse osmosis is the focus of several earlier proposals, including in particular the proposal disclosed in PCT/AU2006/001187, the contents of which are incorporated herein by way of reference.

The problems associated with the successful deployment, operation and maintenance of technology in a marine environment are well understood by those engaged in offshore industries, particularly oil and gas, and this knowledge can be applied to new technology such as ocean wave energy conversion. The primary engineering design of an ocean energy system is a complex task that seeks to maximize energy capture and conversion, while keeping cost of construction to a reasonable level and also ensuring that cost of ownership is acceptable over the life of the technology. In respect of maintenance costs, there must be a thorough understanding of the reliability of key wear elements and failure modes of the system.

The issue of how to handle storm conditions may also need to be addressed. In particular, it is desirable for a wave energy conversion system to be able to respond to changes in sea states and to be able to revert to a safe standby mode when conditions exceed maximum operating levels, preferably automatically. Once sea states have fallen back to normal operating levels the system should ideally reconfigure itself for normal operation, again preferably automatically. Any sustained damage to part of the plant caused by, for example, storm events should not prevent operation of the remaining functional parts of the system. In other words, all failure modes of the wave energy conversion system should be 'soft'.

It would be advantageous for buoyant actuators to have these features.

Buoyant actuators can be large physical structures with diameters or linear dimensions ranging up to ten metres and displacement volumes up to one thousand cubic metres. In order to meet the electricity needs of a large community, a wave energy plant would need to comprise a multitude (typically hundreds) of such actuators servicing an array of hundreds of seawater pumps or energy conversion devices. Such arrays of devices are necessary to scale up the power output as individual units may have output power capacities of perhaps one megawatt whereas the whole farm of elements may have an instantaneous power output of hundreds of megawatts.

The transportation of hundreds of buoyant actuators to a deployment site would be made extremely difficult and expensive if they had to be transported at full size.

It would also be advantageous for buoyant actuators to be manufactured onshore and then collapsed and packed for transportation to an offshore site where they can be configured to full size and subsequently deployed.

It is against this background that the invention was developed.

### Disclosure of the Invention

According to a first aspect of the invention there is provided a buoyant actuator responsive to wave motion, the buoyant actuator comprising a body defining a chamber for accommodating matter, a hydrodynamic property of the body being selectively variable by varying the matter within the chamber.

The variation to the hydrodynamic property may comprise a variation to the buoyancy (either positively or negatively) or a variation to the response area (such as the volume or shape) of the body, as well as a combination thereof. The variation to the matter may comprise addition of matter to, or extraction of matter from, the chamber.

The matter may comprise a solid, liquid or gas, as well as any combination thereof.

The matter may take any appropriate form or forms. By way of example, the matter may be in the form of air, water (including in particular water from the environment in which the actuator is operating), or one or more solid inserts, such as solid spheres or other discrete elements, as well as any combination thereof.

The matter added to the chamber may be in a form which is the same as an existing form within the chamber or it may be in a different form. By way of example, in one arrangement, seawater may be added to the chamber in circumstances where a quantity of seawater was already present therein (possibly in combination with one or more other forms of matter). In another arrangement, seawater may be added to the chamber in circumstances where the matter contained in the chamber did not already comprise seawater.

Where the matter contained within the chamber comprises a plurality of forms, the matter extracted from the chamber may comprise any one or more of such forms.

When deployed, the buoyant actuator preferably resides in the water some distance below the minimum level of the water surface so that it is always submerged, except possibly in the case of unusually large seas.

It is most desirable that the buoyant actuator resides in the water column at a position where it can intercept the maximum amount of energy and yet remain totally submerged for the entire time the wave energy plant is operational; the only time when it may be exposed is during the passage of wave troughs in seas that exceed the operational limits of the device. The buoyant actuator therefore needs to be deployed at a depth such that its upper surface is typically a few metres below the neutral water line. Moreover, the combination of buoyant actuator and mechanism to which it is operably connected (such as a pump) preferably defines a minimum total length leading to deployment in water depths preferably no less than ten metres and no greater than one hundred metres.

The shape of the buoyant actuator may also be an important feature of this invention. Computation fluid dynamics (CFD) has been utilised extensively to determine which shapes provide the best performance in terms of energy take up. The CFD analysis, when applied to actuator designs of dimension less than or equal to one quarter wavelength (the criterion referred to as 'point absorber'), rules out any actuator shapes with excessive breadth-to-thickness ratios. Hence canopies or parachute like actuators are less efficient as energy gathering devices when viewed as point absorbers. This conclusion does not apply to thin canopy-like absorbers (such as those disclosed in aforementioned PCT/AU2006/001187) when they are allowed to extend outside of the point absorber regime; that is, when they are longer than one-quarter of the wavelength. In these cases, the optimization is different and the canopy structure is useful. Moreover, canopies maintain more than one attachment point and so are not prone to rotation.

For point absorbers the CFD analysis indicates that spheres, squat inverted cones or squat cylinders are appropriate shapes for the buoyant actuator with a single tether. CFD analysis verifies that the longer and thinner the shape, the more energy can be converted into rotation of the buoyant actuator, which does not produce useful tension in the tether operably connecting it to the mechanism and leads to lower energy coupling to the wave disturbance. A spherical shape is ideal because, owing to its symmetry, there is no rotational coupling between the wave disturbance and the buoyant actuator so there is maximal conversion of heaving force to linear tension on the tether.

The differences in energy gathering performance between a sphere, a squat cylinder and a squat inverted cone are not so great as to exclude these shapes in favour of spheres when other factors such as manufacturability and robustness are also taken into consideration. Hence there is a range of shapes that have acceptable energy gathering performance and acceptable ratings in terms of robustness.

Preferably, the body comprises a pliant membrane defining an outer skin at a boundary of the chamber, the membrane being adapted to deflect in response to a variation in matter within the body. The deflection provides the change to the hydrodynamic property of the body.

The skin preferably defines a cavity which constitutes the chamber and which may communicate via a port to the surrounding seawater. The cavity may comprise a closed water-tight cavity. It is not essential that the chamber be watertight but rather merely that it can retain and isolate the seawater volume inside with minimal leakage during normal operation so that it behaves like a captive mass acting against the forces of the water outside of the actuator.

In one arrangement, the chamber may be of a generally spherical configuration. With such an arrangement, the chamber may be defined by a generally spherical wall structure comprising an outer skin formed by the pliant membrane. The outer skin may be constructed of panels of fabric-reinforced polymer material bonded together.

The wall structure may further comprise a reinforcement means extending between upper and lower locations on the body. The reinforcement means may comprise a plurality of reinforcing straps configured as hoops extending circumferentially along the surface and passing through the upper and lower locations. The reinforcing straps may be made of the same material as the skin so that material compatibility and hence adhesion is optimized. The top and bottom of the actuator have extra reinforcing in the form of circular rings again made of the same fabric reinforced polymer.

Anchoring point may be provided on the body at the bottom thereof for tethering the buoyant actuator in position. A lifting point may be provided on the body at the upper end thereof.

The anchoring point may comprise a lower eyelet threaded onto the reinforcing straps. A further strap may also pass through the lower eyelet and be bonded onto the bottom portion of the spherical skin. The reinforcing straps and also the further strap bear the load under normal operation. As the buoyant actuator is uplifted by wave motion, the straps are tightened, and tension is transmitted down through the eyelet to the tether to deliver an uplifting force to the mechanism below. After the passage of a wave, the buoyant actuator descends under the influence of the return force imparted to it by the mechanism below, causing the loading on the eyelet to decrease and the straps to contract.

With this arrangement, there is some elasticity in the actuator to allow some cushioning of the wave loading when the uplift of a wave tugs on the tether.

The matter contained in the generally spherical chamber may comprise buoyant material introduced to provide the necessary buoyancy to the actuator. This matter may be any material or substance with density less than the density of the fluid surrounding the actuator. The matter may be introduced into the chamber in any appropriate way, such as through an access port provided in the outer skin.

Preferably the matter comprises foam material. The foam material may be in the form of foam spheres.

The chamber may be so filled with the foam spheres that the outer skin of the actuator is drawn into a taut condition by the outward pressure of the foam spheres inside, causing the actuator to assume its design shape. The foam spheres may be in contact with each other in such a manner that they are able to roll against each other. The spheres may act collectively to maintain the outer shape of the actuator and roll against one another in response to outside forces on the actuator while still maintaining the shape of the actuator. With such an arrangement, the spheres are, in effect, acting as rolling bearings so that there is no concentration of force on any single foam sphere if there is a point load applied to the outer skin of the actuator.

In this manner the buoyant actuator may be manufactured, leak and stress tested, and then shipped without the foam buoyant material inside. The foam may be added at a staging post (which could be on a vessel) just prior to deployment at an operating site.

The volume occupied by the foam spheres is in total still less than the total enclosed volume of the actuator and there are interstitial regions around each sphere. These interstitial regions may be filled with fluid to adjust the buoyancy.

The buoyancy can be set or preset and then actively controlled if need be by controlling either the fluid content (such as, for example, the gas pressure or the water volume, as well as a combination thereof).

In another arrangement, the chamber may generally toroidal rather than spherical. In such an arrangement, the body may comprise a torus having a toroidal skin made with similar materials and methods as the spherical skin described above.

Preferably, an inner buoyant structure is accommodated within the space defined by the inner periphery of the torus to which a portion of the outward facing surface of the skin of the torus is preferably bonded. The buoyant structure may comprise to two buoyant elements (such as pieces of rigid foam) that are each shaped to fit the central hole in the torus from the top and the bottom. A connector (such as a tensioning cable) extends between and is secured to the two buoyant elements. An anchoring point is incorporated in or attached to the connector at the underside of bottom buoyant element.

The toroidal cavity enclosed by the skin may be filled with matter in the form of fluid, and the fluid may be pressurized to the extent that the skin is under tension and the shape is rigid. Preferably the fluid is water. The fluid may be introduced through a port which may be sealed to create a watertight seal.

The buoyant actuator when filled with fluid would be close to neutrally buoyant especially if the fluid is water. Positive buoyancy is provided to the actuator by the elements.

Automatic shutdown of the buoyant actuator during storm conditions can be achieved by accessing the fluid in the chamber via the port and controlling the fluid pressure on a real time basis. This may involve at least partial deflation the chamber to provide the actuator with a reduced surface area, thereby rendering it less susceptible to the enhanced wave forces. After the passage of the storm, the chamber may be reinflated.

In another arrangement, the body may comprise a buoyant section below which the chamber is disposed. The chamber may be defined by a cylindrical side wall depending from the buoyant section, and also a bottom wall. The side wall and the bottom wall are of pliant material. The bottom wall may be provided with reinforcement means comprising straps extending inwardly from the outer periphery to a central location at which there is an anchoring point and to which the straps are connected. The reinforcement may further comprise a circumferential ring at the periphery of the bottom wall, and the straps may be attached at their outer ends to the ring.

The matter contained in the chamber preferably comprises a fluid, preferably water from the surrounding water in which the buoyant actuator is operating (typically seawater). The chamber may communicate with the surrounding water by means permitting intake and discharge of fluid in certain conditions. Such means may comprise a valve system having two valves, one being a one-way inlet valve only allowing fluid to pass into the chamber and the other being a one-way outlet valve only allowing fluid to move out of the chamber into the surrounding seawater.

The buoyancy of the buoyant actuator is provided by buoyant section above the chamber. The buoyant section may comprise a short cylindrical foam filled volume.

In normal operating mode the buoyant actuator is completely filled with seawater and both one-way valves are closed. The heaving motion of the wave disturbances acts on the body, causing it to move upwards and exert tension on the tether by which the buoyant actuator is connected to the mechanism below. By virtue of the construction of the buoyant actuator, there is a degree of elasticity inherent in the material so that some elastic elongation of the actuator occurs at the peak of the uplift. This degree of elastic deformation is advantageous as it limits the jarring effect of the tether as it takes up the loading.

Aside from small changes in elongation due to elasticity, the shape of the body defining the chamber remains generally constant during normal operation and no fluid passes through either of the valves, the volume of fluid contained in the chamber remaining substantially constant.

As the sea state increases beyond a predetermined level, the dynamic pressure loading on the actuator increases, forcing the one-way outlet valve to open and small amounts of fluid are forced out of the outlet. At the same time the inlet one-way valve remains closed so the net effect is to reduce the volume of fluid inside the chamber and compress its volume. The material of the skin being no longer under internal pressure will relax and fold over on itself.

The wave force exerted on the actuator is proportional to the volume of the actuator so the reduced volume state corresponds to a reduced uptake of wave energy which is exactly what is required to limit the energy absorption during storm conditions.

After the passage of a storm the wave heights gradually return to normal levels and the dynamic pressure of the seawater outside the chamber will become greater than the pressure inside the chamber and the inlet one-way valve will open allowing fluid to flow back into the actuator volume. This process will occur gradually until the actuator is again fully inflated and there is no longer any pressure differential across the inlet valve and it will close. The actuator, at full volume, is then responding to wave disturbances with its maximum efficiency.

The function of the one-way outlet valve may be augmented or indeed replaced altogether by allowing the overlapping portions of the fabric skin to act as a plurality of one-way valves.

In a variation to the previous arrangement, the chamber below the buoyant section may be defined by a generally conical downwardly tapering wall structure terminating at reinforced bottom section to which an anchoring point is attached.

In order to maintain the required degree of buoyancy, supplementary buoyancy may be provided to the body. This may comprise a plurality of smaller spherical floats attached to the upper surface of the buoyant section.

According to a further aspect of the invention there is provided a wave energy conversion system comprising an energy conversion device and a buoyant actuator according to the first aspect of the invention, the buoyant actuator being buoyantly suspended within a body of water above the energy conversion device whereby dynamic uplift of the buoyant actuator in response to wave motion in the body of water is transferred to the energy conversion device through the buoyant actuator.

The energy conversion device may be of any appropriate form such as a fluid pump or linear electric generator.

According to a still further aspect of the invention there is provided a method of extracting energy from wave motion, the method comprising operation a wave energy conversion system according to the preceding aspect of the invention.

According to a still further aspect of the invention there is provided a method of varying a hydrodynamic property of a buoyant actuator responsive to wave motion, the method comprising selectively varying matter contained in a chamber within the buoyant actuator.

According to a still further aspect of the invention there is provided a method of operating a buoyant actuator, the method comprising selectively varying matter contained in a chamber within the buoyant actuator to vary a hydrodynamic property thereof.

### Brief Description of the Drawings

The invention will be better understood by reference to the following description of several specific embodiments as shown in the accompanying drawings in which:
Figure 1 is schematic elevational view of a buoyant actuator according to the first embodiment forming part of apparatus for harnessing ocean wave energy;
Figure 2 is a schematic perspective view of the buoyant actuator according to the first embodiment;
Figure 3 is a side elevational view of the buoyant actuator;
Figure 4 is a detailed view of the lower portion of the buoyant actuator;
Figure 5 is a view similar to Figure 2, showing in particular buoyant inserts within the buoyant actuator;
Figure 6 is a schematic cross-sectional view of a buoyant actuator according to a second embodiment;
Figure 7 is a fragmentary view of the buoyant actuator of Figure 6;
Figure 8 is as view similar to Figure 6, except that the chamber of the buoyant actuator is shown in a deflated condition;
Figure 9 is a sectional elevational view of a buoyant actuator according to a third embodiment;
Figure 10 is a fragmentary elevational view of the buoyant actuator of Figure 9;
Figure 11 is a further fragmentary elevational view of the buoyant actuator of Figure 9;
Figure 12 is a schematic side elevational view of a buoyant actuator according to a fourth embodiment;
Figure 13 is a plan view of the underside of the buoyant actuator of Figure 12;
Figure 14 is a cut-away perspective view of the buoyant actuator of Figure 12;
Figure 15 is a schematic side elevational view of the buoyant actuator of Figure 12 shown in a deflated condition;
Figure 16 is a perspective view of a buoyant actuator according to a fifth embodiment;
Figure 17 is a side elevational view of the buoyant actuator shown in Figure 16;
Figure 18 is a plan view of the buoyant actuator shown in Figure 16;
Figure 19 is a view similar to Figure 17 except that the buoyant actuator is shown in a deflated condition;
Figure 20 is a fragmentary side elevational view of the buoyant actuator of Figure 16 shown in an inflated condition;
Figure 21 is a view similar to Figure 20 except that the buoyant actuator is shown in a deflated condition;
Figure 22 is a sectional perspective view of a buoyant actuator according to a sixth embodiment;
Figure 23 is a side elevational view of the buoyant actuator shown in Figure 22;
Figure 24 is a plan view of the buoyant actuator shown in Figure 22;
Figure 25 is a bottom plan view of the buoyant actuator shown in Figure 22;
Figure 26 is an exploded elevational view of a top end assembly of the buoyant actuator shown in Figure 22;
Figure 27 is an exploded elevational view of a bottom end assembly of the buoyant actuator shown in Figure 22;
Figure 28 is a further exploded elevational view of a bottom end assembly of the buoyant actuator shown in Figure 22; and
Figure 29 is a fragmentary elevational view of the bottom end assembly and a skin attached thereto.

### Best Mode(s) for Carrying Out the Invention

The embodiments shown in the drawings are each directed to a buoyant actuator 10 for use in apparatus 11 for harnessing ocean wave energy and for converting the harnessed energy to high-pressure seawater, typically above 100psi and preferably above 800psi. High-pressure seawater generated by the apparatus 11 can be piped to shore for use in any appropriate purpose. In one application, the high-pressure seawater is used as a motor fluid to drive a turbine, with the shaft power therefrom being used to generate electricity. In another application, the high-pressure seawater may be fed to a reverse osmosis desalination unit from which fresh water can be generated. The salt water concentrate from the desalination unit, which is still at high-pressure, may then be fed to a turbine for extraction of mechanical energy. The spent salt water concentrate can then be returned to the ocean if desired.

The apparatus 11 is installed and operating in a body of seawater 12 having a water surface 13 and a seabed 14. A pump mechanism 15 is anchored with respect to the seabed 14. The buoyant actuator 10 is operably connected to the pump mechanism 15 and is buoyantly suspended within the body of seawater 12 above the pump mechanism 15 but below the water surface 13 at a depth such that its upper surface is typically a few metres below the neutral water line. Moreover, the combination of buoyant actuator 10 and the pump mechanism 15 to which it is operably connected preferably defines a total length which in its minimum condition (when the buoyant actuator is at the lowest point of its excursion) is appropriate for deployment in water depths preferably no less than ten metres and no greater than one hundred metres.

The buoyant mechanism 10 is operatively connected to the pump mechanism 15 by way of a coupling 16 which includes a tether 17.

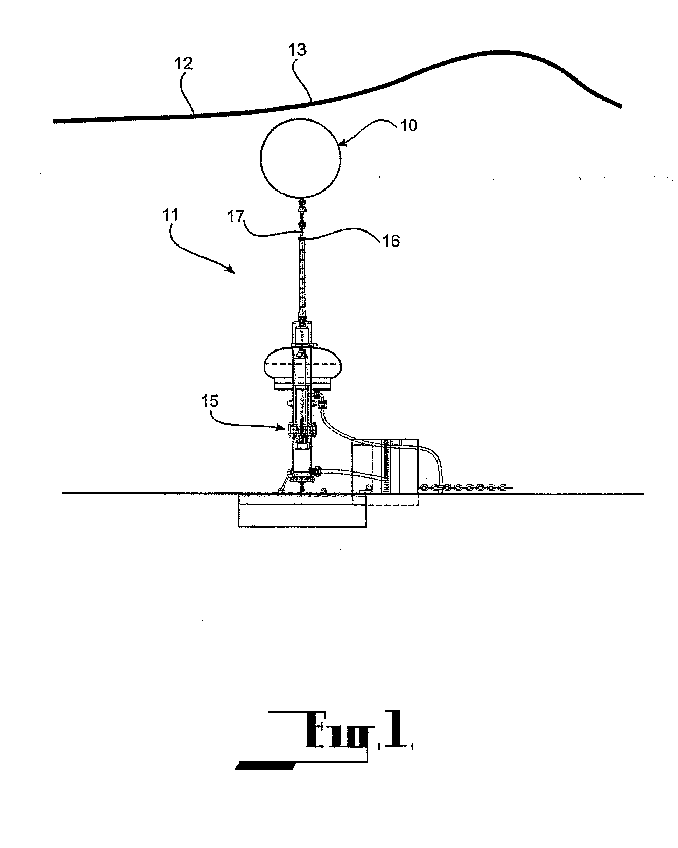

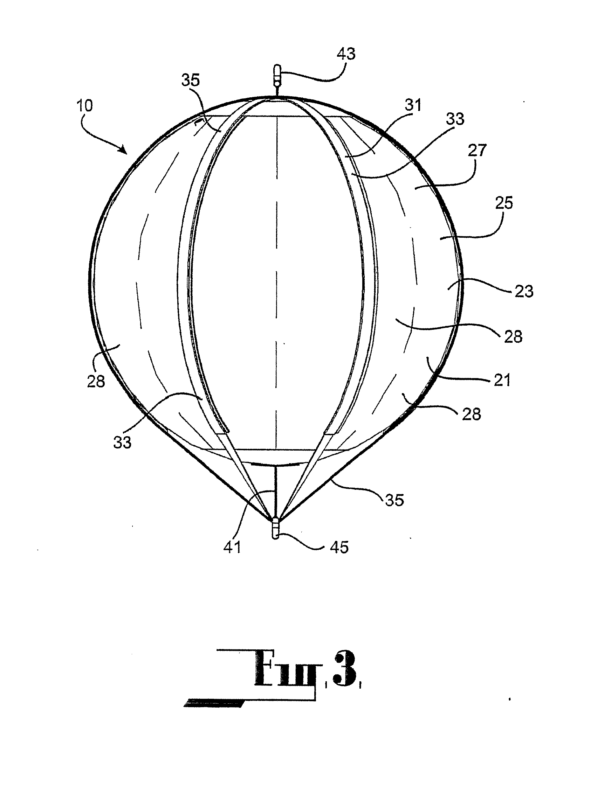

Referring to Figures 1 to 5, the buoyant actuator 10 according to the first embodiment comprises a body 21 defining a chamber 23 of generally spherical configuration. Specifically, the chamber 23 is defined by a generally spherical wall structure 25 comprising an outer skin 27 formed by a pliant membrane. The outer skin 27 may be constructed of panels 28 of the pliant membrane material bonded together. The pliant membrane comprises a fabric reinforced polymer material such as the commercial product Hypalon^{®} that is widely used for the manufacture of marine buoys and fenders. This material may be glued to itself to form tough waterproof joints as is familiar to persons experienced in this process.

The wall structure 25 further comprises a reinforcement means 31 extending between upper and lower locations on the body 21. The reinforcement means 31 comprise a plurality of external reinforcing straps 33 configured as hoops 35 extending circumferentially along the surface of the outer skin 27 and extending through the upper and lower locations. The reinforcing straps 33 are made of the same material as the skin 25 so that material compatibility and hence adhesion is optimized.

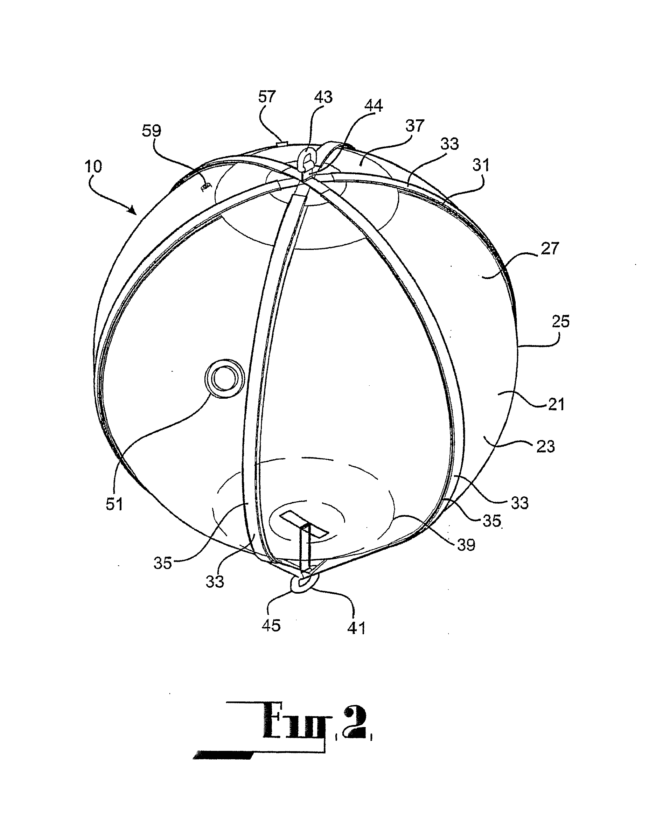

The top and bottom of the buoyant actuator 10 have extra reinforcing in the form of circular rings 37, 39 (as best seen in Figure 2), again made of the same fabric reinforced polymer.

An anchoring point 41 is provided on the body 21 at the bottom thereof for tethering the buoyant actuator in position. A lifting point 43 is provided on the body 21 at the upper end thereof.

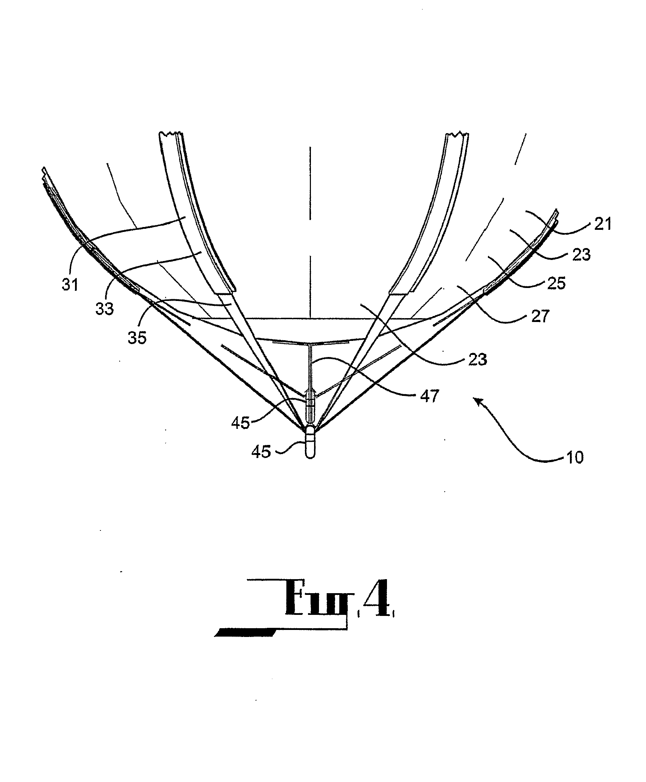

The anchoring point 41 comprises a lower eyelet 45 threaded onto the reinforcing straps 33. A further strap 47 may also pass through the lower eyelet 45 and be bonded onto the bottom portion of the spherical outer skin 27. The reinforcing straps 33 and also the further strap 47 bear the load under normal operation. As the buoyant actuator 10 is uplifted by wave motion, the straps 33, 47 are tightened, and tension is transmitted down through the eyelet 45 to the tether 17 to deliver an uplifting force to the piston pump mechanism below. After the passage of a wave, the buoyant actuator 10 descends under the weight of the pump piston mechanism 15 below, causing the loading on the lower eyelet 45 to decrease and the straps 33, 47 to contract. Normal and deflated conditions are illustrated in Figure 4.

With this arrangement, there is some elasticity in the actuator to allow some cushioning of the wave loading when the uplift of a wave tugs on the tether 17.

The use of eyelet 45 as the anchoring point is advantageous in that it allows some rotational flexibility for the actuator. This is desirable so that twisting of the tether is minimized during operation of the actuator.

The lifting point 43 is attached by means of a hoop 44 made of fabric, the hoop 44 being formed contiguously with one of the circumferential reinforcing straps 33. The lifting point 43 is designed to take the static dry load of the buoyant actuator 10 during lifting and handling; it is not designed to carry the full dynamic working load as the anchoring point 41 is designed to do.

The chamber 23 contains matter comprising buoyant material introduced to provide the necessary buoyancy to the buoyant actuator 10. The matter is introduced into the chamber 23 through a port fitting 51 which is provided in the outer skin 27 and which can be opened and closed.

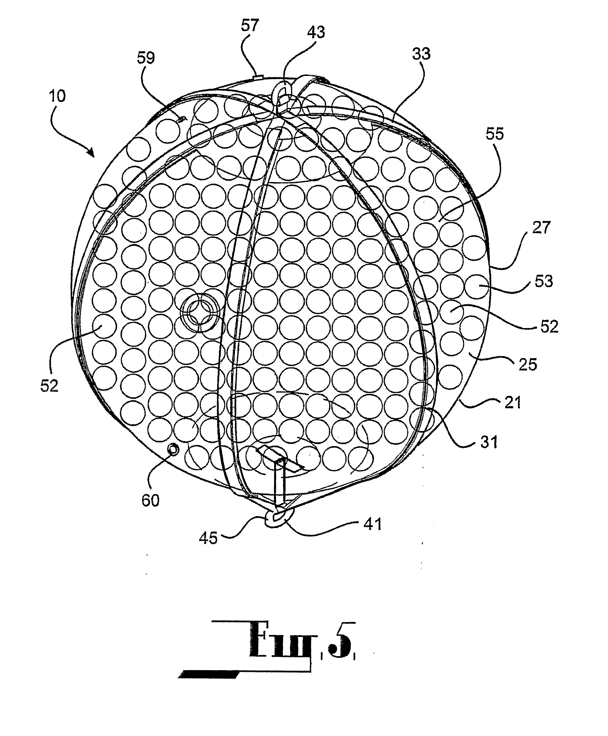

In this embodiment, the matter comprises foam buoyant material 52 in the form of a plurality of foam spheres 53, shown in Figure 5. The foam spheres 53 are made of marine resistant, closed cell polystyrene foam and come in a range of diameters. For this embodiment, a ball diameter of 100 mm (4 inches) is appropriate.

The chamber 23 is so filled with the foam spheres 53 that the outer skin 27 of the buoyant actuator 10 is drawn into a taut condition by the outward pressure of the foam spheres 53 inside, causing the actuator to assume its design shape.

The foam spheres 53 are in contact with each other in such a manner that they are able to roll against each other. The spheres 53 can act collectively to maintain the outer shape of the actuator 10 and roll against one another in response to outside forces on the actuator while still maintaining the shape of the actuator. With such an arrangement, the spheres 53 are, in effect, acting as rolling bearings so that there is no concentration of force on any single foam sphere in circumstances where there is a point load applied to the outer skin of the actuator.

The buoyant actuator 10 according to the embodiment may be manufactured, leak and stress tested, and then shipped without the foam buoyant material 52 inside. The foam buoyant material may be added at a staging post (which could be on a deployment vessel) just prior to deployment at an operating site.

The volume occupied by the foam spheres 53 is in total still less than the total enclosed volume of the chamber 23 and there are interstitial regions 55 around each sphere 53. The interstitial regions 55 may be filled with fluid to adjust the buoyancy.

The actuator can be made watertight by sealing the buoyancy port fitting 51 after the foam spheres 53 have been placed inside the chamber 23.

The outer skin 27 incorporates three other port fittings for communication with the enclosed chamber 23. Two of the further port fittings 57, 59 are located towards the top of the chamber 23. The third further port fitting 60 is located near the bottom of the chamber 23.

In this way there can be three operating modes for the buoyancy actuator. In the first mode, the chamber 23 of the buoyancy actuator 10 is pressurized with air or gas from an external source through port 57. Port 57 becomes a one-way valve to allow gas to flow into the chamber 23 but not to leak out. Port 57 is a pressure relief valve to limit the maximum gas pressure.

The buoyant actuator 10 may be fixed at a particular gas pressure and the gas supply line to it disconnected, or the gas supply line may be left connected and the pressure actively controlled. The changes in buoyancy arise out of the slight volume change of the outer skin 27 due to changes in the internal pressure.

The second mode of operation is similar to that of the first mode but with the addition that a fixed amount of water or liquid residing in the interstitial areas 55. This makes the net buoyancy less sensitive to the degree of inflation of the chamber 23 by the gas pressure as there is less volume change.

The third mode of operation is similar to that of the second mode but in addition to the mixture of air and water, but with the addition of the third port fitting 60 allowing fluid to pass in and out of the chamber 23. This allows maximum control of the buoyancy by being able to alter the gas/fluid ratio in the interstitial regions 55.

It is an advantageous feature of this embodiment that the buoyancy can be set or preset and then actively controlled if need be by controlling either the gas pressure or the water volume within the chamber 23, or both.

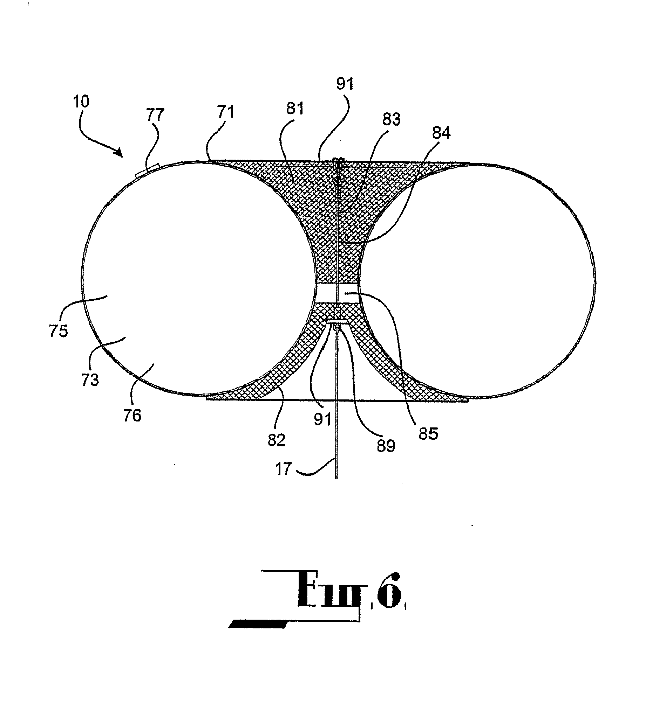

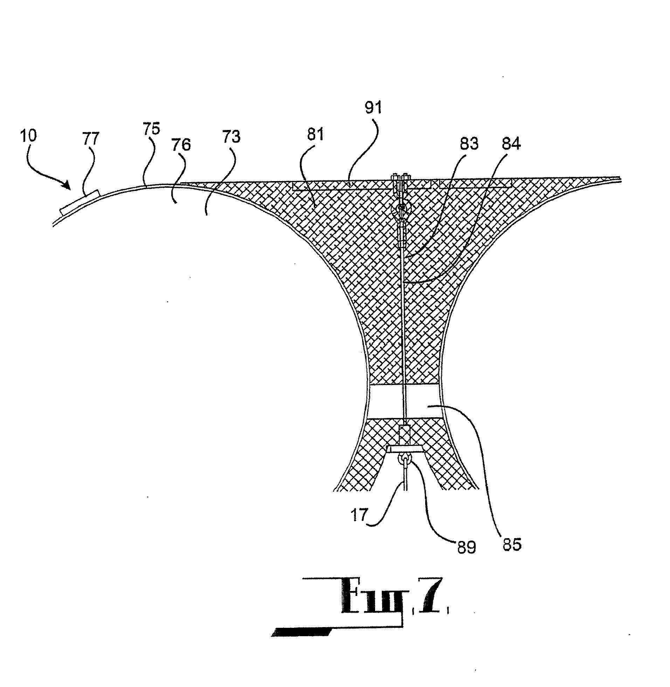

Referring now to Figures 6 to 8, the buoyancy actuator 10 according to the second embodiment comprises a body 71 defining a chamber 73 of generally toroidal configuration. This embodiment is different from the first embodiment in that the basic shape is toroidal rather than spherical. Nevertheless, the efficiency of energy conversion is still very good because the shape is still generally squat and the toroidal outer diameter is only slightly larger than twice its vertical height. In this embodiment, the toroidal configuration is generally circular in cross-section.

The body 71 comprises a toroidal skin 75 made with similar materials and methods as the spherical outer skin 27 described in relation to the first embodiment.

The toroidal skin 75 defines a closed water-tight cavity 76 which forms the chamber 73 and which can communicate via a port 77 to the surrounding seawater.

A portion of the outward facing surface of the toroidal skin 75 is bonded to two rigid buoyant elements 81, 82 each comprising a piece of rigid buoyant material such as foam. The buoyant elements 81, 82 are shaped to fit the central aperture bounded by the toroidal configuration of the body 71, one from the top and the other from the bottom. A connector 83 comprising a tensioning cable 84 extends between, and is secured to, the two buoyant elements 81, 82. While the buoyant elements 81, 82 may touch each other where they meet in the centre, there is preferably a small gap 85 therebetween to allow tightening of the tensioning cable 84.

An anchoring point 89 is incorporated in to the connector 83 at the underside of bottom buoyant element 82. The anchoring point 89 is configured as an eyelet.

The tensioning cable 84 passes through the buoyant elements 81, 82 and is cast in situ in one of the buoyant elements and threaded through the other to facilitate assembly. The tensioning cable 84 interconnects the rigid buoyant elements 81, 82 and, when adjusted to the correct tension, allows the load on the connector to be spread over a wide area via spreader plates 91. In this manner the whole assembly is made rigid and the application of the load is through the centre of mass of the buoyant actuator 10 as it should be for stability reasons.

The toroidal cavity 76 enclosed by the skin 75 is filled with matter in the form of fluid, and the fluid may be pressurized to the extent that the skin is under tension and the shape is rigid. Preferably the fluid is water. The fluid may be introduced through a port 77 which can be sealed to create a watertight seal.

The buoyant actuator 70 when filled with fluid would be close to neutrally buoyant especially if the fluid is water. Positive buoyancy is provided to the actuator by the buoyant elements 81, 82.

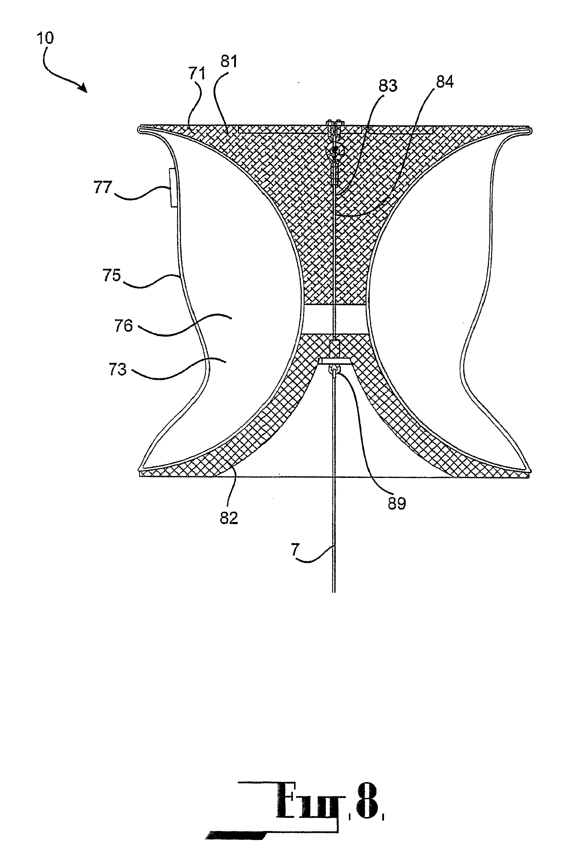

Automatic shutdown of the buoyant actuator 70 during storm conditions can be achieved by accessing the fluid in the cavity 76 via the port 77 and controlling the fluid pressure on a real time basis. Such a system (which is not shown) would comprise a flexible hose connected at one end to the fluid cavity 76 via the port 77 and at its other end connected to a control system that could pump out the fluid and deflate the cavity 76 when the system sensed that the maximum wave height was being exceeded. The deflated condition is shown in Figure 8. The buoyant actuator 70, with greatly reduced surface area, has less susceptibility to the enhanced wave forces and therefore is less likely to be damaged or to transfer excessive force to the pump. After the passage of the storm, the system would gradually re inflate the cavity 76 with fluid until it was again fully pressurized and able to operate normally.

The buoyant actuator 10 may be collapsed into its deflated condition (as shown in Figure 8) for storage and transportation to a deployment site. At such a site the cavity 76 is pressurised with fluid, preferably water, and the port 77 is closed, yielding a solid shape once again.

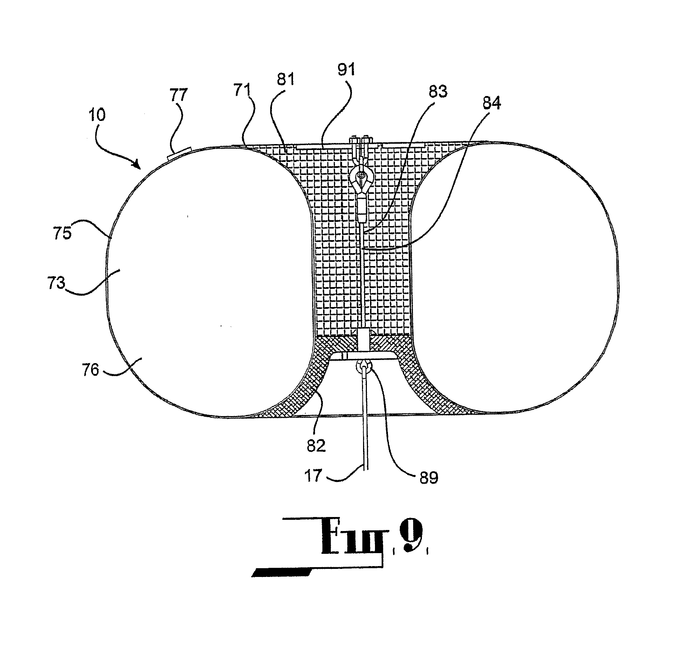

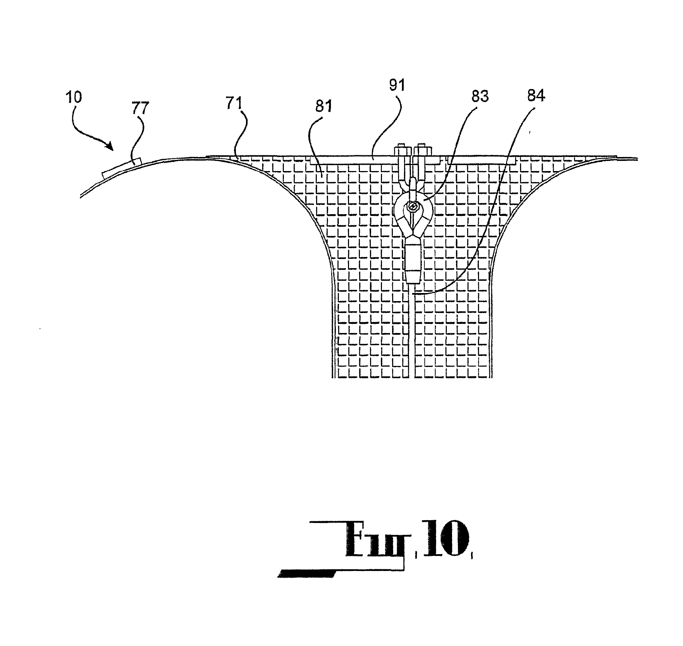

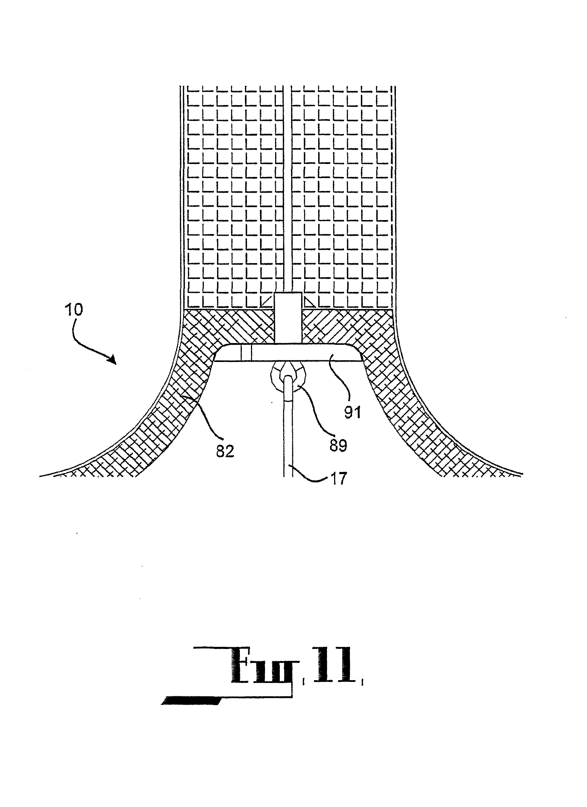

Referring now to Figures 9 to 11, the buoyancy actuator 10 according to the third embodiment is similar to that of the second embodiment and so like reference numerals are used to identify corresponding parts. In this embodiment, the body 71 defining the chamber 73 of generally toroidal configuration is an approximately elliptical cross section. This is advantageous in comparison to the second embodiment in that it affords a greater depth for the same diameter so the shape corresponds more to the ideal spherical shape.

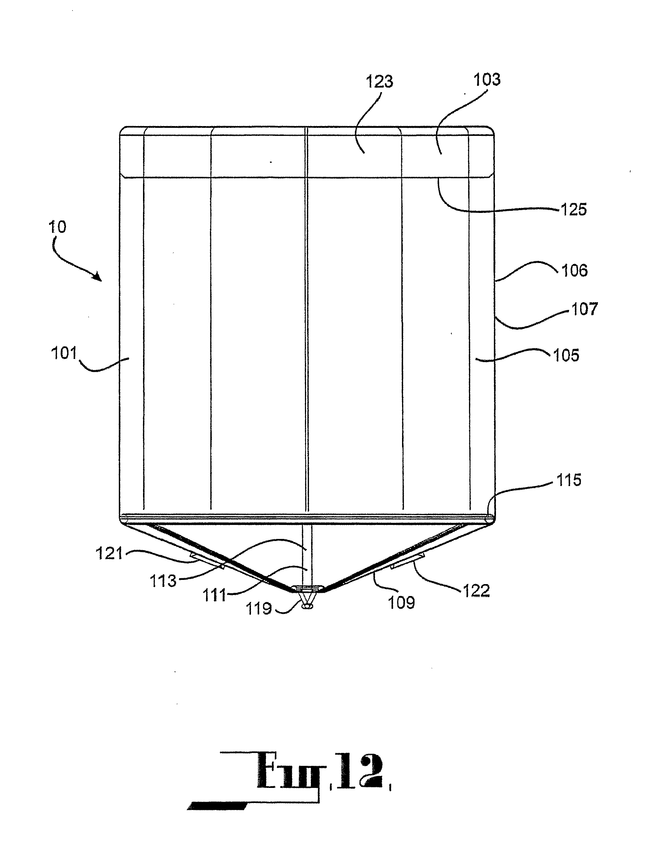

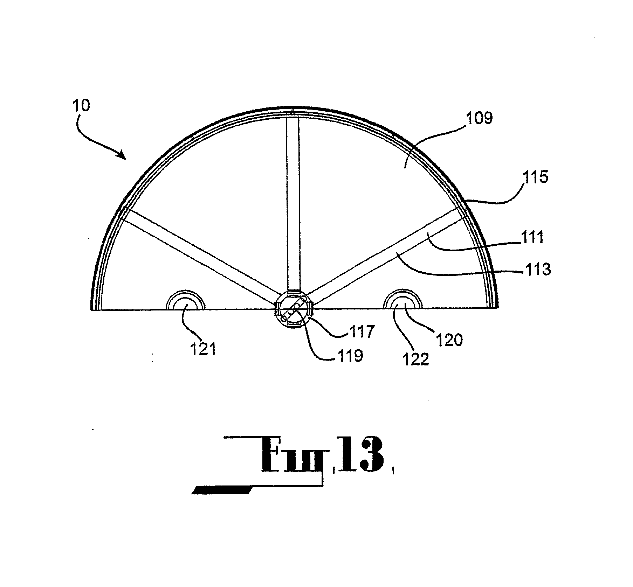

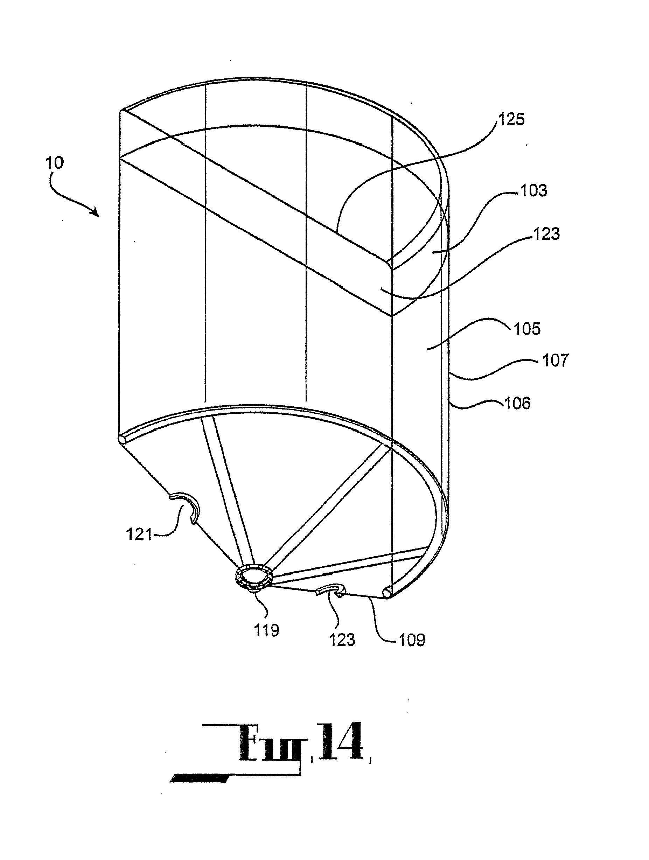

Referring now to Figures 12 to 15, the buoyant actuator 10 according to the fourth embodiment has provision to respond to, and recover from, storm conditions without recourse to an external system as do the two previous embodiments.

In this embodiment, the buoyant actuator 10 comprises a body 101 having a buoyant section 103 below which there is a chamber 105. The chamber 105 is defined by an outer skin 106 comprising cylindrical side wall 107 depending from the buoyant section 103 and a bottom wall 109 which tapers inwardly and downwardly. The side wall 107 and the bottom wall 109 are of pliant material. Specifically, the side wall 107 and the bottom wall 109 are constructed using the same materials and methods employed in relation to the outer skin 27 of the first embodiment.

The bottom wall 109 incorporates reinforcement means 111 comprising straps 113 attached to, and extending inwardly from, a circumferential reinforcing ring 115 at the outer periphery to a central location 117 at which there is an anchoring point 119 and to which the straps 113 are connected. The anchoring point 119 comprises an eyelet.

The matter contained in the chamber 105 comprises a fluid, preferably seawater. The chamber 105 is in communication with the surrounding seawater through a valve system 120 permitting intake and discharge of fluid in certain conditions. The valve system 120 has two valves, one being a one-way inlet valve 121 only allowing fluid to pass into the chamber 105 and the other being a one-way outlet valve 122 only allowing fluid to move out of the chamber 105 into the surrounding seawater.

It is not a requirement that the chamber 105 be watertight, but rather that it merely retain and isolate the seawater volume inside with minimal leakage during normal operation so that it behaves like a captive mass acting against the forces of the water outside of the buoyancy actuator 10. This is particularly useful as is allows some relaxation on the manufacturing requirements for the buoyant actuator not having to specify 100% watertight seals and hence there may be a cost saving advantage.

The buoyancy of the buoyant actuator 10 is provided by buoyant section 103 above the chamber 105. The buoyant section 103 comprises a short cylindrical buoyant volume 123 encased in skin 125 of fabric material, typically of the same material as the side wall 107 and bottom wall 109. The buoyant volume 123 may comprise foam material which is similar to that used for the foam buoyancy spheres 53 of the first embodiment and which is of closed-cell construction impervious to seawater. Given that the foam material retains buoyancy for a long time in seawater, it is not necessary for the fabric skin 125 to be completely watertight. The cylindrical side wall 107 is attached to, and depends from, the outer periphery of the fabric skin 125.

In normal operating mode, the chamber 105 of the buoyant actuator 10 is completely filled with seawater and both one-way valves 121, 122 are closed. The heaving motion of the wave disturbances acts on the buoyancy actuator 10 causing it to move upwards and exert tension on the tether connected to the pump mechanism below. As was the case in the first embodiment, there is by design, a degree of elasticity inherent in the material of the buoyancy actuator 10 so that some elastic elongation of the actuator occurs at the peak of the uplift. This degree of elastic deformation is important as it limits the jarring effect of the tether and the pump mechanism as it takes up the loading. This assists in enhancing the life of components in a wave energy gathering system by limiting the peak loadings on critical elements.

Aside from small changes in elongation due to material elasticity, the shape of the buoyant actuator 10 remains substantially constant during normal operation and no fluid passes through either of the valves 121, 122. Accordingly, the volume of fluid contained in the chamber 105 remains substantially constant.

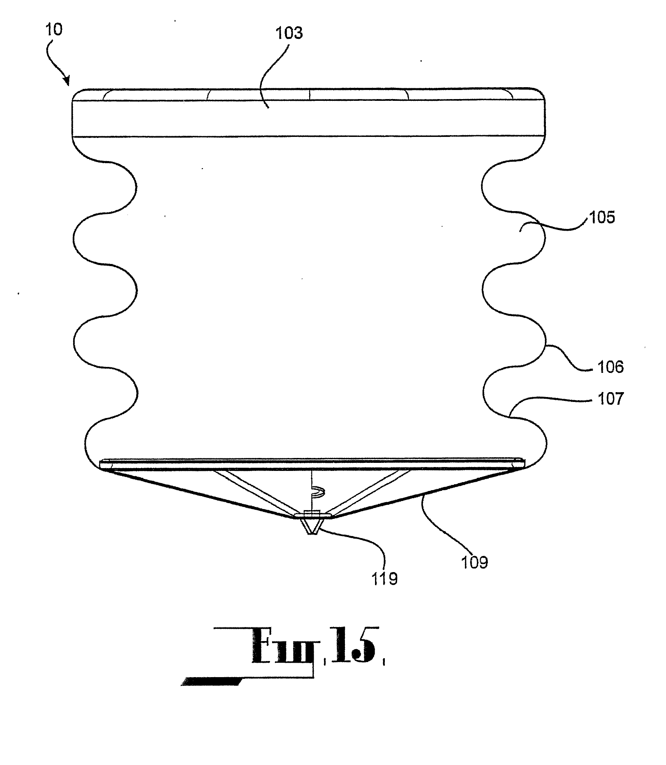

As the sea state increases beyond a predetermined level, the dynamic pressure loading on the buoyancy actuator 10 increases, forcing the one-way outlet valve 122 to open and small amounts of fluid are forced out of the outlet. At the same time the inlet one-way valve 121 remains closed so the net effect is to reduce the volume of fluid inside the chamber 105 and compress its volume. The material of the skin 106 being no longer under internal pressure will relax and fold over on itself, as shown in Figure 15.

The wave force exerted on the actuator 10 is proportional to the volume of the actuator so the reduced volume state of the chamber 105 corresponds to a reduced uptake of wave energy which is exactly what is required to limit the energy absorption during storm conditions.

After the passage of a storm the wave heights gradually return to normal levels and the dynamic pressure of the seawater outside the chamber 105 will become greater than the pressure inside the chamber 105. Consequently, the inlet one-way valve 121 will open allowing fluid to flow back into the chamber 105. This process will occur gradually until the chamber 105 is again fully inflated and there is no longer any pressure differential across the inlet valve 121, at which time it closes. The actuator, with the chamber 105 at full volume, is then responding to wave disturbances with its maximum efficiency.

The function of the one-way outlet valve 122 may be augmented or indeed replaced altogether by allowing the overlapping portions of the fabric skin 106 to act as a plurality of one-way valves. This can be achieved by making the seams leaky; that is, not sealing them along their entire length but rather only enough attachment between panel sections is required to ensure that the chamber 105 is substantially leak-tight under normal operating conditions. When the actuator 100 is subject to extreme wave loading, the luffing of the fabric skin 106 will establish vents to allow passage of water out from the actuator.

In a similar manner it is possible, through correct selection of skin material thickness, pliability, degree of overlap and tacking points, to eliminate the one-way valve 121 for the inflow as well, and have this function performed by the leaky sections in the fabric skin 106. It is necessary to ensure that the fabric seams remain open long enough after the external dynamic pressures have dropped to allow water to flow slowly back into the actuator volume.

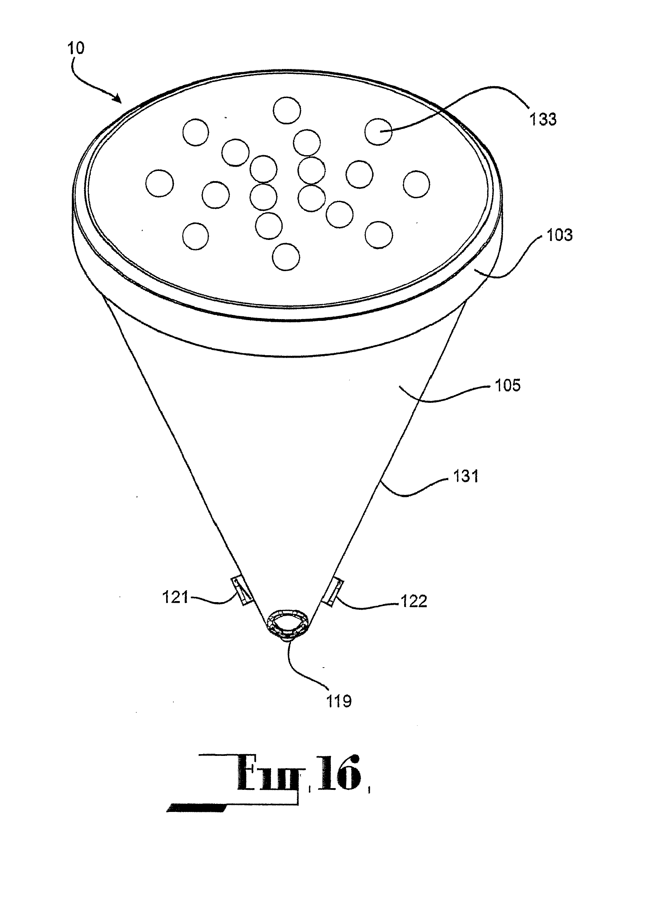

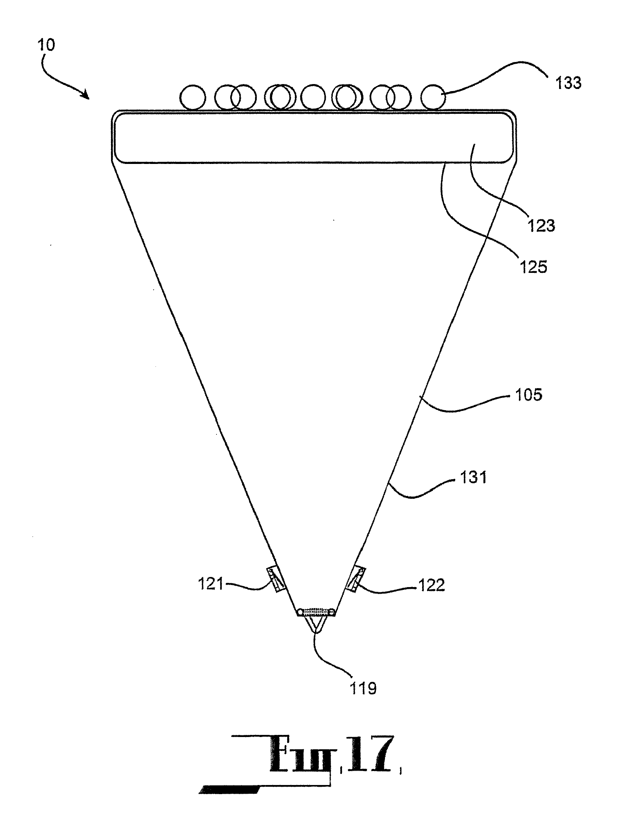

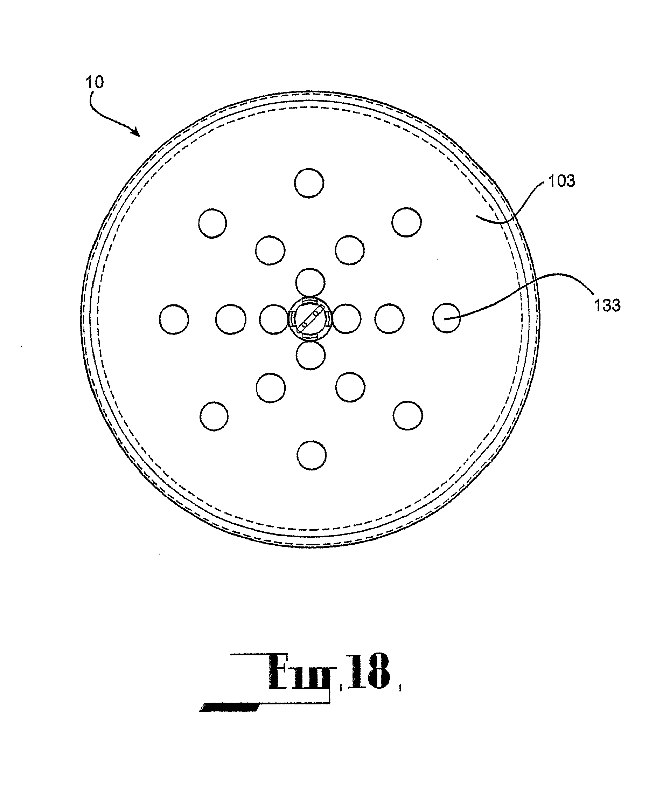

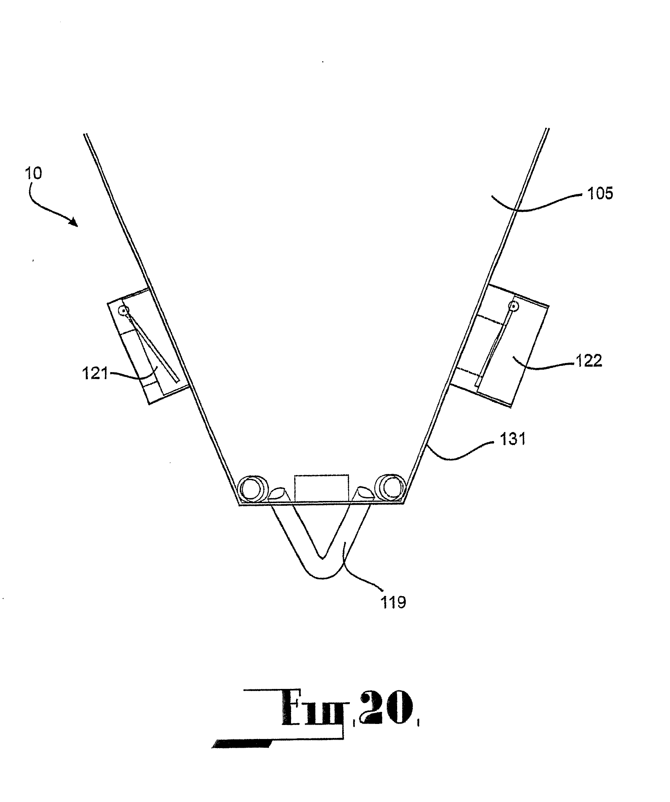

Referring now to Figures 16 to 21, the buoyancy actuator 10 according to the fifth embodiment is similar to that of the previous embodiment and so like reference numerals are used to identify corresponding parts. In this embodiment, the chamber 105 below the buoyant section 103 is defined by a generally conical downwardly tapering wall structure 131 terminating at reinforced bottom section to which an anchoring point 119 is attached.

In order to maintain the required degree of buoyancy, supplementary buoyancy is provided to the body. The supplementary buoyancy is provided by a plurality of smaller spherical floats 133 attached to the upper surface of the buoyant section 103.

This embodiment operates in a similar fashion to the previous embodiment, utilising valves 121, 122.

It may not be possible to utilise the leaky seam as a one-way valve in this embodiment as the effect of the conical shape on the bending of the skin would make it difficult to apply this technique. Normal one-way valves are therefore used.

In normal operation in seas that are within the operating limits of the wave energy system, the buoyant actuator 130 is fully inflated, as shown in Figures 16, 17 and 20. Fluid is allowed to enter through the inlet one-way valve 121 whereas the outlet valve 122 remains closed as there is not enough pressure difference to open it.

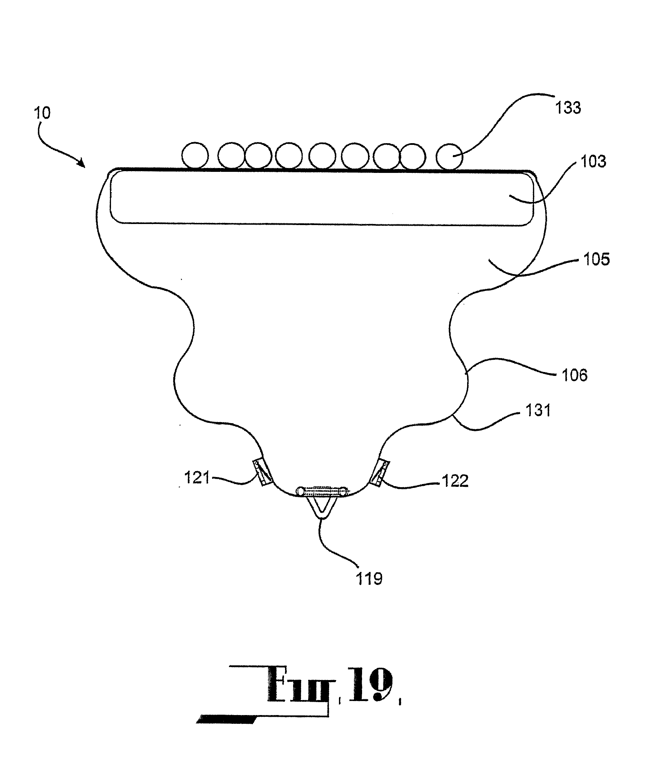

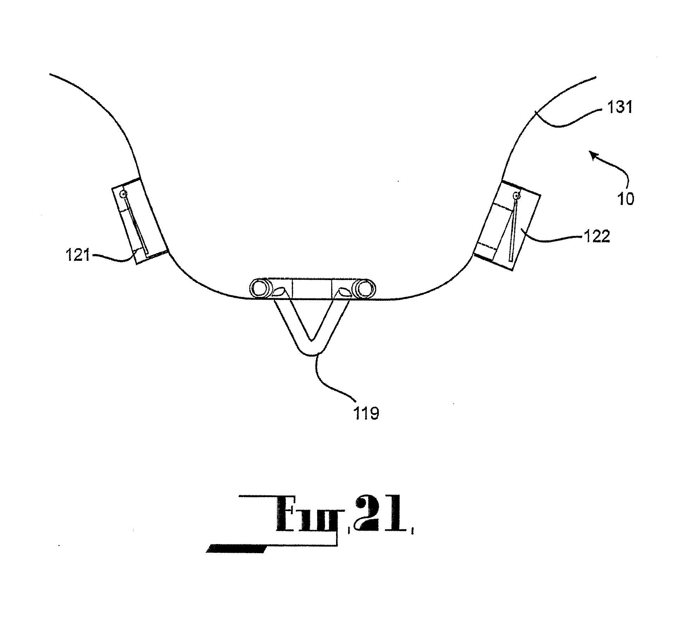

In storm conditions the situation is reversed and is depicted in Figures 19 and 21. The inlet valve 121 is closed due to the internal pressure and the outlet valve 122 is open to allow fluid escape and to somewhat deflate the buoyant actuator. In this embodiment, the inlet and outlet one-way valves 121, 122 are carefully set with enough hysteresis so that the actuator 10 will remain inflated for normal operation and will not prematurely deflate. The adjustments on the one-way valves may typically involve setting spring tensions in the valves.

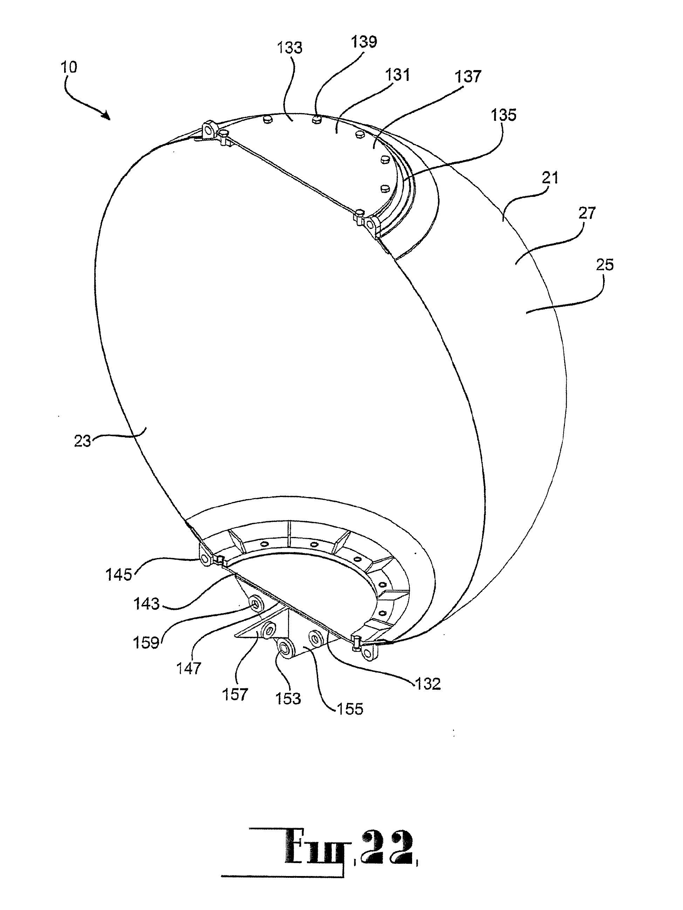

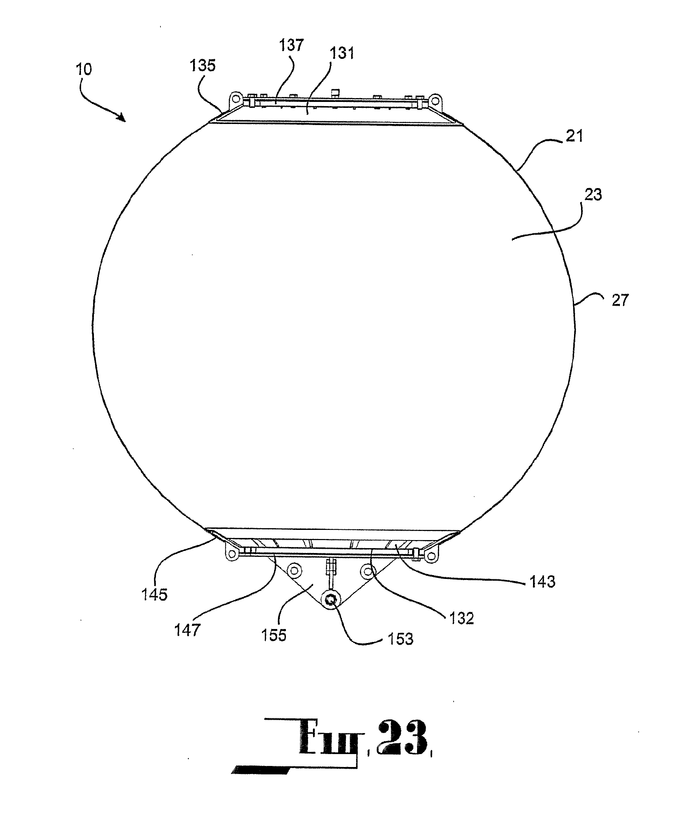

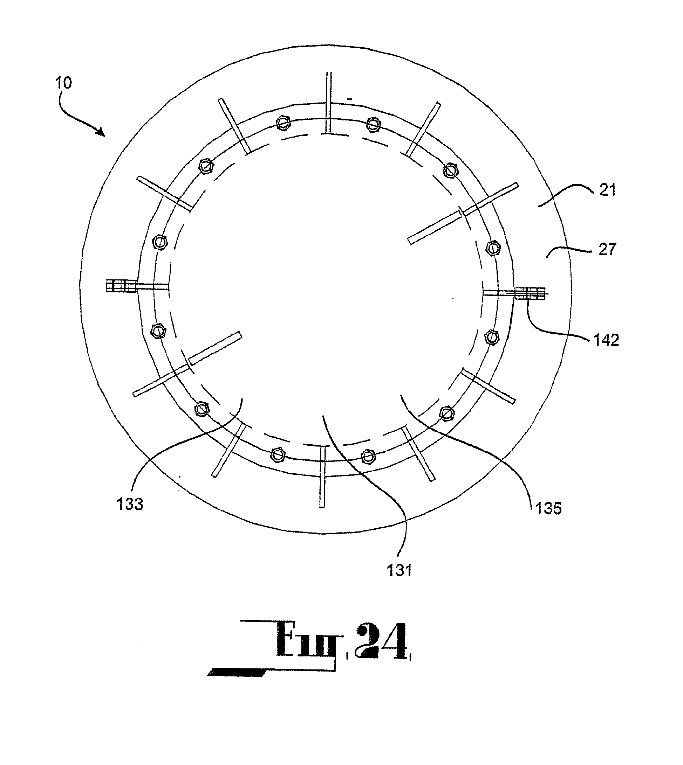

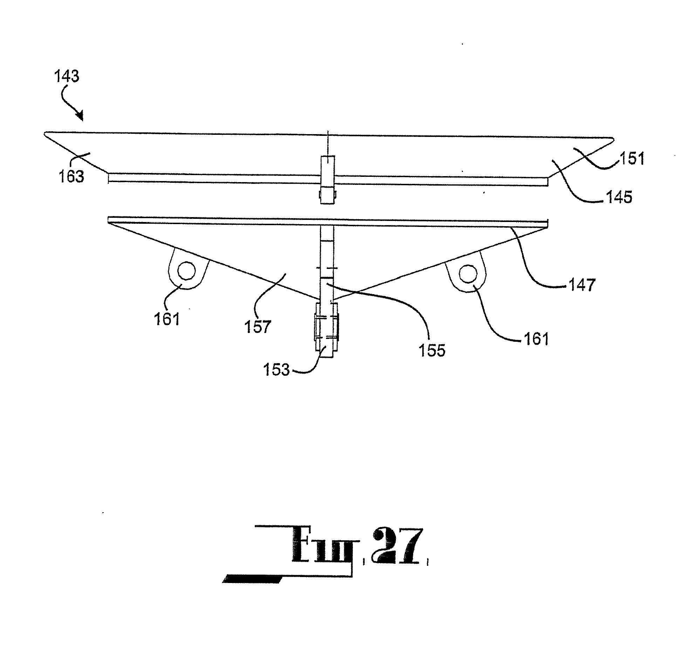

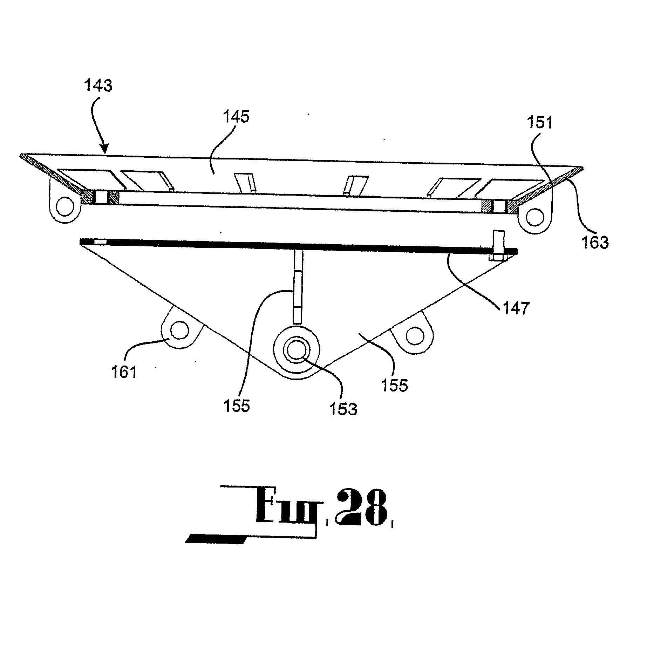

Referring to Figures 22 to 29, the buoyant actuator 10 according to the sixth embodiment comprises a body 21 defining a chamber 23. Specifically, the chamber 23 is defined by a generally spherical wall structure 25 comprising a pliant outer skin 27 extending between rigid upper and lower portions 131, 132. In the arrangement shown, the chamber 23 is of generally spherical configuration, but of course other configurations are possible including cylindrical and frusto-conical configurations.

The use of the rigid upper portion 131 and the rigid lower portion 132 avoids the need for the reinforcement means extending between the upper and lower locations of the body 21 as used in relation to the first embodiment.

The outer skin 27 is made with similar materials and methods as the outer skin described in relation to the first embodiment.

The upper portion 131 comprises a top assembly 133 having an outer flange section 135 and a central cover plate section 137 adapted to be releasably secured together by fasteners 139 such as bolts. The outer flange section 135 incorporates a peripheral flange 141 to which the upper periphery of the skin 27 is sealingly attached. Lifting lugs 142 are incorporated in the upper portion 131.

The lower portion 132 comprises a bottom assembly 143 having an outer flange section 145 and a central cover plate section 147 adapted to be releasably secured together by fasteners 149 such as bolts. The outer flange section 145 incorporates a peripheral flange 151 to which the lower periphery of the skin 27 is sealingly attached. The central cover plate section 147 incorporates an anchoring point 153 for attachment to a tether, as was the case with previous embodiments. In the arrangement shown, the anchoring point 153 is incorporated in a gusset 155 provided on the underside of the central plate section 147. A further gusset 157 is provided on the underside of the central plate section 147 cross-wise with respect to gusset 155. The two gussets 155, 157 incorporate several anchor points 161 for emergency tethers.

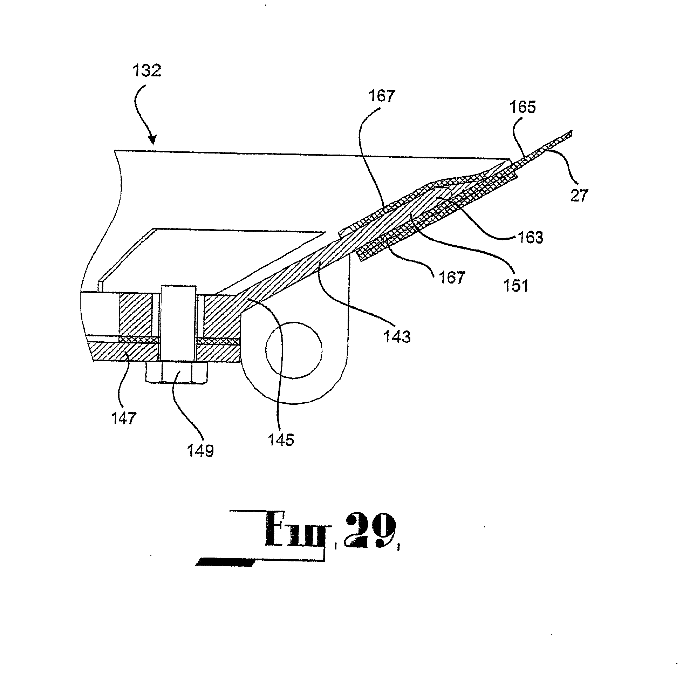

The peripheral flange 151 presents a lip 163 to which the lower periphery 165 of the outer skin 27 is attached. The lower periphery 165 of the skin 27 is attached to the lip 163 by being adhesively bonded thereto, as shown in Figure 29. The lower periphery 165 is glued to the lip 163 and then sandwiched between two strips 167 of membrane material glued to the inside and outside surfaces.

The upper periphery of the skin 27 is attached to the peripheral flange 141 of the top assembly 133 in a similar way.

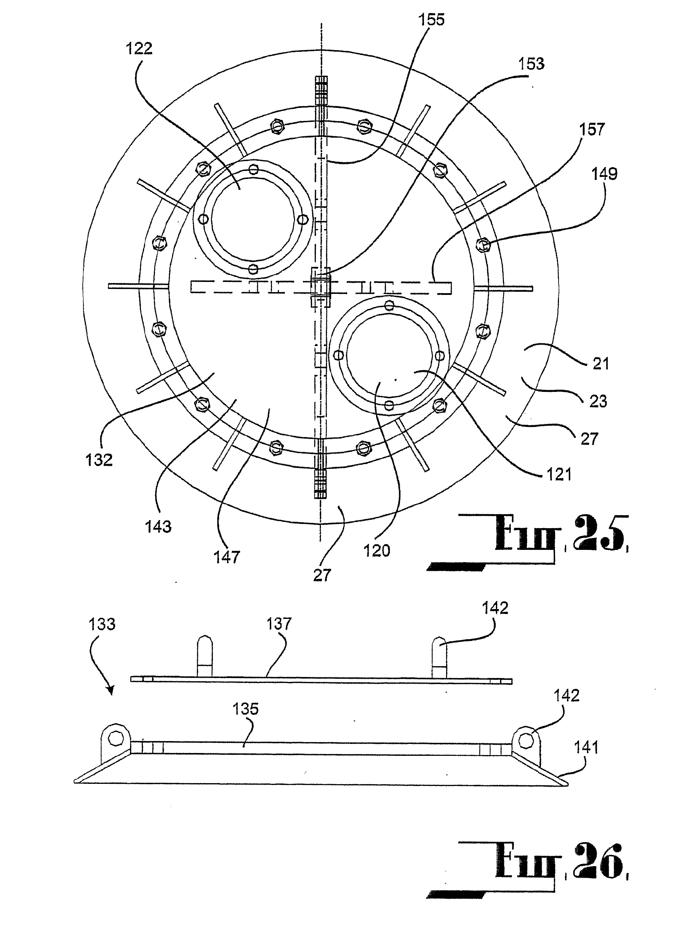

The valve system 120 comprising one-way inlet valve 121 and one-way outlet valve 122 is incorporated in the central cover plate section 147, as shown in Figure 25.

The buoyant actuator according to this embodiment operates in a similar fashion to the previous embodiments.

From the foregoing, it is apparent that the various embodiments provide a simple yet highly effective arrangement for effecting variation to a hydrodynamic property of the buoyant actuator, such as for example a variation to the buoyancy (either positively or negatively) or a variation to the response area (such as the volume or shape), as well as a combination thereof.

It should be appreciated that the scope of the invention is not limited to the scope of the embodiments described.

Further, it is to be understood that, while the embodiments disclosed herein is directed primarily at addressing the performance and reliability of the wave energy conversion system as described in aforementioned PCT/AU2006/001187, the invention is not limited in scope to this particular wave energy conversion system, nor is it limited in scope to wave energy conversion systems. The invention may, for instance, be used to provide robust underwater buoys to support undersea structures such as cable, pipelines and the like, as well as being suitable for maintaining predetermined loading under variable conditions by way of a dynamic compensation of the buoyancy.

Modifications and improvements may be made without departing from the scope of the invention.

Throughout the specification, unless the context requires otherwise, the word "comprise" or variations such as "comprises" or "comprising", will be understood to imply the inclusion of a stated integer or group of integers but not the exclusion of any other integer or group of integers.

## Claims

1. A buoyant actuator (10) responsive to wave motion, the buoyant actuator comprising a body (21, 71, 101) defining a chamber (23, 73, 105) for accommodating matter, a hydrodynamic property of the body being selectively variable by varying the matter within the chamber, the body comprising a wall structure (25, 131) having a pliant outer skin (27, 106) at a boundary of the chamber, the outer skin being adapted to deflect in response to a variation in matter within the body, the matter comprising a plurality of buoyant spheres (53) arranged to roll one against another, the chamber being filled with the spheres so that the outer skin is drawn into a taut condition by the outward pressure of the spheres inside, causing the actuator to assume a design shape, the spheres being able to collectively maintain the shape of the actuator and roll against one another in response to outside forces on the actuator while still maintaining the shape of the actuator.

2. A buoyant actuator according to claim 1 wherein the variation to the hydrodynamic property comprises a variation to the buoyancy, either positively or negatively.

3. A buoyant actuator according to claim 1 wherein the variation to the hydrodynamic property comprises a variation to the response area of the body, such as the volume or shape of the body.

4. A buoyant actuator according to claim 1 wherein the variation to the hydrodynamic property comprises a variation to the buoyancy, either positively or negatively, and a variation to the response area of the body, such as the volume or shape of the body.

5. A buoyant actuator according to any one of the preceding claims wherein the variation to the matter comprises addition of matter to, or extraction of matter from, the chamber (23, 73, 105).

6. A buoyant actuator according to any one of the preceding claims wherein the volume occupied by the spheres (53) is in total less than the total enclosed volume of the chamber (23) and wherein there are interstitial regions (55) around the spheres to accommodate fluid to vary the buoyancy.

7. A buoyant actuator according to any one of the preceding claims wherein the chamber (23, 73, 105) is adapted for communication with surrounding water in which the buoyant actuator is operating.

8. A buoyant actuator according to claim 7 wherein communication with the surrounding water is by means permitting intake and discharge of water under certain conditions.

9. A buoyant actuator (10) according to claim 8 wherein said means comprise a valve system (120).

10. A buoyant actuator (10) responsive to wave motion, the buoyant actuator (10) comprising a body (21, 71, 101) defining a chamber (23, 73, 105) for accommodating matter, at least one hydrodynamic property of the body being selectively variable by varying a response area of the body during operation of the buoyant actuator, the variation to the response area of the body comprising changing the volume or shape of the body by the addition of matter to, or extraction of matter from, the chamber.

11. A wave energy conversion system comprising an energy conversion device (15) and a buoyant actuator (10) according to any one of the preceding claims, the buoyant actuator being buoyantly suspended within a body of water (12) above the energy conversion device whereby dynamic uplift of the buoyant actuator (10) in response to wave motion in the body of water (12) is transferred to the energy conversion device through the buoyant actuator.

12. A method of extracting energy from wave motion, the method comprising operating a wave energy conversion system according to claim 11.

13. A method of varying a hydrodynamic property of a buoyant actuator (10) responsive to wave motion, the method comprising selectively varying matter contained in a chamber (23, 73, 105) within the buoyant actuator.

14. A method of operating a buoyant actuator (10), the method comprising selectively varying matter contained in a chamber (23, 73, 105) within the buoyant actuator to vary a hydrodynamic property thereof.

15. A method of operating a wave energy conversion device having a buoyant actuator (10), the method comprising selectively varying matter contained in a chamber (23, 73, 105) within the buoyant actuator to vary a hydrodynamic property thereof.
